# FASCICULE DE BREVET EUROPEEN

(11) **EP 3 697 613 B1**
(45) Date de publication et mention de la délivrance du brevet: **15.12.2021**
(21) Numéro de dépôt: 18808421.4
(22) Date de dépôt: 17.10.2018
(51) Int. Cl.: B32B 17/10, F41H 5/04, H05B 3/86

(54) **VITRAGE A FILS CHAUFFANTS AYANT DES AMENEES SUR LE CHANT OU UNE FACE EXTERIEURE DU VITRAGE**
VERGLASUNG MIT HEIZDRÄHTEN MIT SAMMELLEITERN AUF DER KANTE ODER EINER ÄUSSEREN FLÄCHE DER VERGLASUNG
GLAZING WITH HEATING WIRES HAVING BUS BARS ON THE EDGE OR AN EXTERIOR FACE OF THE GLAZING

(30) Priorité: 18.10.2017 FR 1759771
(43) Date de publication de la demande: 26.08.2020
(73) Titulaire: SAINT-GOBAIN GLASS FRANCE, 92400 Courbevoie (FR)
(72) Inventeur: TONDU, Thomas, 45600 Sully (FR); MAYEUX, Jean-Benoit, 45800 Saint-Jean-de-Braye (FR)
(74) Mandataire: Saint-Gobain Recherche
(86) Numéro de dépôt international: PCT/FR2018/052588
(87) Numéro de publication internationale: WO 2019/077274

(56) Documents cités:
- EP-A1- 0 593 940
- EP-A1- 2 399 735
- EP-A2- 0 939 580
- DE-A1-102007 046 320
- GB-A- 1 033 322

## Description

Cette invention concerne les vitrages feuilletés à réseau de fils chauffants, relativement épais, notamment d'épaisseur au moins égale à 15 mm, tels que les vitrages à résistance balistique, qu'ils soient destinés à des véhicules blindés terrestres, aériens, à des bateaux, voire à des bâtiments.

Actuellement, le système de fils chauffants intégrés au vitrage feuilleté est alimenté par l'intermédiaire d'au moins deux amenées de courant électrique (souvent désignées par le terme anglais « bus-bars »), elles-mêmes intégrées au vitrage feuilleté et disposées en périphérie de l'étendue des fils chauffants. Ces amenées sont disposées dans le clair de glace (ou clair de vue) du vitrage feuilleté nu.

Ces amenées peuvent être masquées par une sérigraphie opaque pour des raisons esthétiques (aspect des amenées) ou de furtivité (réflexion lumineuse).

Les inconvénients de cette technique sont :
- la réduction du champ de vision, du fait des amenées ou de la sérigraphie ;
- en cas d'absence de sérigraphie, la réflexion lumineuse générée par l'amenée ;
- la réduction de la zone de chauffe (les amenées et les zones à l'extérieur des amenées ne chauffent pas) ;
- l'épaisseur d'intercalaire adhésif (tel que polyvinylbutyral - PVB - ou équivalent) entre les deux plis de verre peut-être plus importante pour permettre la présence des amenées.

Les inventeurs ont donc recherché à augmenter le champ de vision d'un vitrage feuilleté à fils chauffants, à en minimiser l'épaisseur d'adhésif intercalaire tout en résolvant la gêne otique susceptible d'être causée par les amenées.

Ce but a été atteint par l'invention qui, en conséquence, a pour objet un vitrage feuilleté à réseau de fils chauffants comprenant au moins deux feuilles transparentes rigides reliées l'une à l'autre deux à deux par une couche adhésive intercalaire, dans lequel au moins un réseau de fils chauffants est disposé sur une face ne constituant pas l'une des deux faces principales extérieures du vitrage feuilleté, de l'une desdites au moins deux feuilles transparentes rigides, l'alimentation du réseau de fils chauffants étant effectuée par contact avec au moins deux amenées reliées à une source de courant électrique, caractérisé en ce que les amenées sont disposées sur les chants du vitrage feuilleté et/ou sur sa face principale extérieure destinée à être orientée, en position de montage, à l'opposé de l'atmosphère extérieure.

Le vitrage de l'invention comporte ainsi nécessairement des fils électroconducteurs chauffants qui sont pliés à angle droit sur un bord d'une feuille transparente rigide. D'autre part, la fabrication de ce vitrage feuilleté comporte des opérations de chauffage, de mise sous pression réduite, augmentée, de manière habituelle et connue. Cependant, contre toute attente, les fils chauffants pliés ne se sont pas cassés au cours de leur mise en conformité avec le bord de la feuille transparente rigide (pliage) et/ou de ces opérations de fabrication effectuées dans des conditions exigeantes de température et/ou de pression. La fonction chauffante a ainsi été obtenue de manière efficace et durable.

Selon d'autres caractéristiques préférées du vitrage feuilleté de l'invention :
- son épaisseur est comprise entre 15 et 100 mm, ce qui est suffisant eu égard à l'encombrement des amenées, tout en correspondant aux applications visées, dont il sera question plus en détail ci-dessous ;
- lesdites au moins deux feuilles transparentes rigides sont en verre minéral tel que sodocalcique, aluminosilicate, borosilicate d'épaisseur comprise entre 0,5 et 20 mm, la feuille transparente rigide constituant la face principale extérieure du vitrage feuilleté destinée à être orientée, en position de montage, à l'opposé de l'atmosphère extérieure, pouvant alternativement être en matériau polymère tel que polycarbonate (PC) ou poly(téréphtalate d'éthylène) (PET) comportant notamment un vernis anti-rayure du type polysiloxane, et d'épaisseur comprise entre 0,1 et 10 mm, de préférence d'au plus 7 mm ;
- le verre minéral est recuit, trempé thermiquement ou renforcé chimiquement ; cela sera de préférence le cas des feuilles transparentes rigides les plus éloignées de l'impact attendu par un projectile pour les vitrages à résistance balistique, c'est-à-dire des feuilles autres que celle en contact avec l'atmosphère extérieure et éventuellement que celle qui lui succède immédiatement dans le feuilleté, par exemple ;
- la couche adhésive intercalaire est en polyvinylbutyral (PVB), polyuréthane (PU), éthylène - acétate de vinyle (EVA), d'épaisseur comprise entre 0,2 et 10 mm, notamment entre 0,38 et 4,56 mm ;
- toute feuille transparente rigide sur les bords de laquelle des fils chauffants sont repliés a des bords façonnés selon une forme arrondie de rayon de courbure au moins égal à 1, de préférence 2 et de manière particulièrement préférée 3 mm ; cette disposition est adaptée pour ne pas fragiliser les fils du système chauffant ;
- entre le chant ou la face principale extérieure du vitrage feuilleté destinée à être orientée, en position de montage, à l'opposé de l'atmosphère extérieure, d'une part, et des fils chauffants d'autre part, est interposé un matériau opaque (peinture, adhésif, ...) de préférence noir; ce matériau supprime notamment l'éclat de l'amenée sur le chant du vitrage, vu de l'intérieur ou éventuellement de l'extérieur du véhicule ou du bâtiment ; ce matériau procure de plus avantageusement de la souplesse ;
- des amenées sont disposées en périphérie de la face principale extérieure du vitrage feuilleté destinée à être orientée, en position de montage, à l'opposé de l'atmosphère extérieure, de manière à être totalement recouvertes, en position de montage, par un encadrement sur lequel le vitrage feuilleté est destiné à être fixé ; ainsi ces amenées sont-elles cachées de la vue de l'intérieur du véhicule ou du bâtiment, sans restreindre le clair de vue plus que cet encadrement de montage ;
- les amenées sont recouvertes par un matériau notamment opaque, apte à en assurer la protection, la durabilité et l'isolation électrique ; il peut s'agir d'un ruban ou d'une bande de polyuréthane noir.

D'autres objets de l'invention consistent en
- un procédé de fabrication d'un vitrage feuilleté décrit ci-dessus, caractérisé en ce qu'il comprend les opérations consistant à
   - mettre en place un réseau de fils électroconducteurs chauffants sur une couche adhésive intercalaire ;
   - dans une zone d'extrémités des fils chauffants, mettre en place au-dessus et en-dessous de ceux-ci des amenées,
   - souder les fils chauffants aux amenées,
   - mettre en place la couche adhésive intercalaire entre les feuilles transparentes rigides,
   - le réseau de fils chauffants et les amenées débordant des feuilles transparentes rigides, rabattre ces parties en débordement des fils chauffants et les amenées sur deux côtés opposés du chant du vitrage feuilleté ou de sa face principale extérieure destinée à être orientée, en position de montage, à l'opposé de l'atmosphère extérieure ;
- l'application d'un vitrage feuilleté décrit ci-dessus, comme vitrage à résistance balistique, pour un véhicule terrestre, aérien ou aquatique, ou pour le bâtiment.

L'invention sera mieux comprise à la lumière de la description suivante des dessins annexés dans lesquels :
- les Figures 1 et 2 sont des représentations schématiques de deux réalisations distinctes de vitrages feuilletés à fils chauffants de l'état de la technique ;
- la Figure 3 est une représentation schématique d'une réalisation de vitrage feuilleté conforme à l'invention ; et
- la Figure 4 est une vue schématique simplifiée de deux dispositions d'amenées sur un vitrage feuilleté conforme à l'invention et d'un encadrement (ou cadre) fixé à l'environnement de montage.

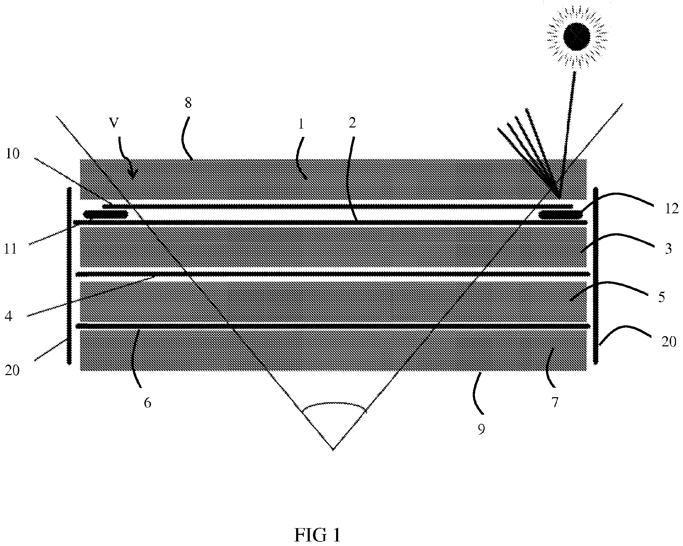

En référence à la Figure 1, un vitrage feuilleté V se compose d'une première feuille 1 de verre sodocalcique de 8 mm d'épaisseur, d'une seconde et d'une troisième feuilles 3 et 5 de verre sodocalcique de 12 mm d'épaisseur, et d'une quatrième feuille 7 de verre sodocalcique de 10 mm d'épaisseur. Les seconde et troisième feuilles 3 et 5, ou seulement la troisième feuille 5 de verre sodocalcique sont (est) trempée(s) thermiquement ou renforcée(s) chimiquement.

Les première et seconde feuilles 1 et 3 de verre sodocalcique sont collées par une couche 2 de polyvinylbutyral (PVB) de 1,52 mm d'épaisseur.

Les seconde et troisième feuilles 3 et 5 de verre sodocalcique sont collées par une couche 4 de polyvinylbutyral (PVB) de 0,38 mm d'épaisseur. Les troisième et quatrième feuilles 5 et 7 de verre sodocalcique sont collées par une couche 6 de PVB de 0,38 mm d'épaisseur.

La quatrième feuille 7 de verre sodocalcique pourrait être remplacée par une feuille de polycarbonate (PC) ou poly(téréphtalate d'éthylène) (PET) comportant notamment un vernis anti-rayure du type polysiloxane, et d'épaisseur au plus égale à 10, voire 7 mm. Une feuille de polycarbonate peut avoir une épaisseur de 2,5 à 3 mm, à titre indicatif. Cette feuille de matériau polymère (PC ou PET) est collée à la troisième feuille 5 de verre sodocalcique par une couche 6 de polyuréthane (PU).

Le vitrage feuilleté V présente une surface principale 8 destinée à être en contact avec l'atmosphère extérieure, et une surface principale 9 opposée destinée à être en contact avec l'intérieur du véhicule ou du bâtiment, en position de montage.

De manière connue, les faces du vitrage feuilleté V sont numérotées de l'extérieur vers l'intérieur, du numéro 1 pour la surface principale 8 au numéro 8 pour la surface principale 9.

Un réseau de fils chauffants 10 est disposé sur la face 2 du vitrage feuilleté V, c'est-à-dire sur la face de la première feuille de verre 1 dirigée vers l'intérieur du véhicule ou du bâtiment, en position de montage du vitrage feuilleté. Les fils chauffants 10 peuvent être en cuivre, tungstène, ou ferronickel selon l'application envisagée, les propriétés mécaniques requises. Ils sont reliés à un courant électrique par l'intermédiaire d'amenées (ou bus-bars) 11 et 12 constituées de tresses conductrices, de câbles électriques ou autres matériaux conducteurs.

Une bande 20 de protection périphérique noire constituée de polyuréthane recouvre le chant du vitrage feuilleté V ; elle empêche la pénétration d'humidité dans le feuilleté, diminue le risque de délamination, garantit la durabilité du feuilleté et a également une fonction d'isolation électrique.

La Figure 1 montre comment le champ de vision de l'intérieur du véhicule ou du bâtiment est limité par les bords intérieurs des deux amenées 11 et 12. D'autre part, on comprend aisément que le positionnement des amenées 11 et 12 entre les feuilles 1 et 3 de verre sodocalcique peut obliger à augmenter la distance entre elles 1, 3.

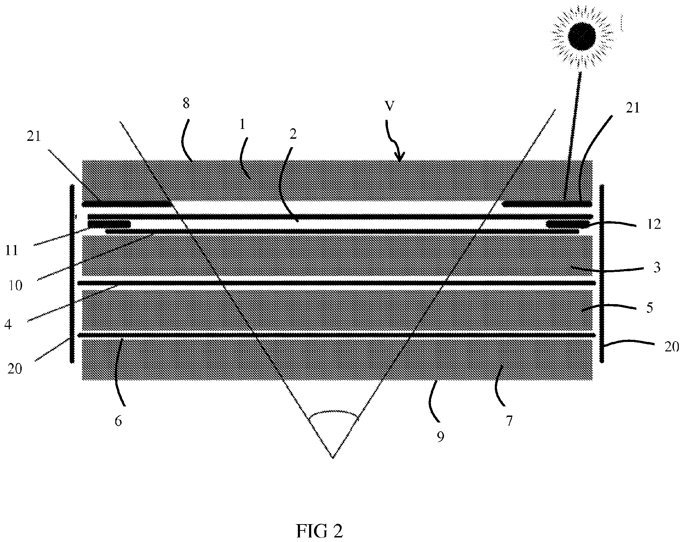

Le vitrage feuilleté V de la Figure 2 diffère de celui de la Figure 1 par la disposition des fils chauffants 10 sur la face 3 du vitrage feuilleté, c'est-à-dire sur la face de la seconde feuille 3 de verre sodocalcique orientée vers l'extérieur du véhicule ou du bâtiment, en position de montage du vitrage feuilleté.

La face 2 du vitrage feuilleté V, c'est-à-dire la face de la première feuille de verre 1 orientée vers l'intérieur de l'espace délimité par le vitrage feuilleté, a une bande périphérique assez large revêtue d'émail 21 dans le but de cacher d'une vue de l'extérieur les amenées 11 et 12. Le champ de vision d'une vue de l'intérieur du véhicule ou du bâtiment est encore plus limité qu'avec le vitrage feuilleté V de la Figure 1.

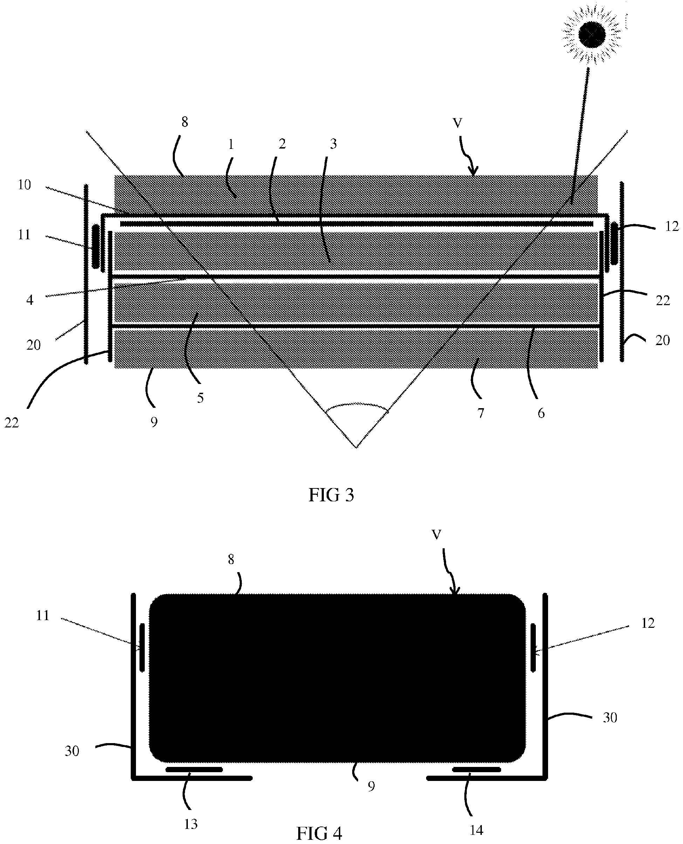

Sur la Figure 3, les fils chauffants 10 sont disposés comme sur la Figure 1 mais une fraction périphérique des fils 10 déborde du vitrage feuilleté V sur tout le tour de celui-ci V. Sur deux côtés opposés de cette fraction périphérique débordante du réseau de fils 10, celui-ci 10 est soudé à au moins une amenée 11 sur un côté, à au moins une amenée 12 sur l'autre côté. De manière non représentée sur la Figure 3, l'amenée 11 comme l'amenée 12 sont constituées chacune d'une partie au-dessus de la nappe de fils 10 et d'une partie en-dessous de celle-ci 10 qui est ainsi prise en sandwich entre les deux parties d'amenée, et les trois constituants sont soudés ensemble. Les parties débordantes des fils chauffants 10 et les amenées 11 et 12 sont repliées sur le chant du vitrage feuilleté V, avec interposition d'un matériau opaque et/ou procurant de la souplesse (22). Ainsi les amenées 11 et 12 sont-elles cachées de la vue de l'intérieur du véhicule ou du bâtiment ; la souplesse du matériau 22 est garante de la durabilité de l'assemblage. Le matériau 22 est électroconducteur, et apte à réaliser une connexion, ou au contraire isolant électrique.

La bande 20 de protection périphérique noire, décrite ci-dessus en référence à la Figure 1, est ici collée au-dessus des fils chauffants 10 repliés et des amenées 11 et 12, sur le chant du vitrage feuilleté V.

Grâce à l'invention, le clair de vue n'est pas limité comme pour les vitrages feuilletés V des Figures 1 et 2. La distance entre les première et seconde feuilles 1 et 3 de verre sodocalcique peut être diminuée grâce au déplacement des amenées 11 et 12 en dehors de la structure feuilletée V elle-même.

Sur la Figure 4 sont représentés les deux positionnements d'amenées selon l'invention : les amenées 11 et 12 sur deux côtés opposés du chant du vitrage feuilleté V, et les amenées 13 et 14 sur deux zones périphériques opposées de sa face principale extérieure 9 destinée à être orientée, en position de montage, à l'opposé de l'atmosphère extérieure.

Dans la configuration de la Figure 4, les amenées 11 et 13 sont reliées électriquement au même potentiel, et les amenées 12 et 14 également, à un potentiel différent de celui des amenées 11 et 13. Il serait également conforme à l'invention que les bornes « plus » et « moins » de l'alimentation électrique du réseau de fils chauffants 10 soient constituées non pas chacune de deux amenées comme sur la Figure 4, mais d'un nombre égal ou différent de une ou plusieurs amenées dans les deux cas.

Sur la Figure 4, les amenées 11, 12, 13 et 14 sont positionnées derrière un encadrement 30 solidaire de la structure de montage telle qu'un véhicule ou un bâtiment. Si l'isolation électrique de l'encadrement 30 par rapport aux amenées 11, 12, 13 et 14 est requise, le vitrage feuilleté V pourra être collé au moyen d'une épaisseur suffisante d'une colle suffisamment isolante électrique, par exemple polyuréthane (PU) ou équivalente.

## Revendications

1. Vitrage feuilleté (V) à réseau de fils chauffants (10) comprenant au moins deux feuilles transparentes rigides (1, 3, 5, 7) reliées l'une à l'autre deux à deux par une couche adhésive intercalaire (2, 4, 6), dans lequel au moins un réseau de fils chauffants (10) est disposé sur une face ne constituant pas l'une des deux faces principales extérieures (8, 9) du vitrage feuilleté (V), de l'une desdites au moins deux feuilles transparentes rigides (1, 3, 5, 7), l'alimentation du réseau de fils chauffants (10) étant effectuée par contact avec au moins deux amenées (11, 12, 13, 14)) reliées à une source de courant électrique, **caractérisé en ce que** les amenées (11, 12, 13, 14) sont disposées sur les chants du vitrage feuilleté (V) et/ou sur sa face principale extérieure (9) destinée à être orientée, en position de montage, à l'opposé de l'atmosphère extérieure.

2. Vitrage feuilleté (V) selon la revendication 1, **caractérisé en ce que** son épaisseur est comprise entre 15 et 100 mm.

3. Vitrage feuilleté (V) selon l'une des revendications 1 ou 2, **caractérisé en ce que** lesdites au moins deux feuilles transparentes rigides (1, 3, 5, 7) sont en verre minéral tel que sodocalcique, aluminosilicate, borosilicate d'épaisseur comprise entre 0,5 et 20 mm, la feuille transparente rigide (7) constituant la face principale extérieure (9) du vitrage feuilleté (V) destinée à être orientée, en position de montage, à l'opposé de l'atmosphère extérieure, pouvant alternativement être en matériau polymère tel que polycarbonate (PC) ou poly(téréphtalate d'éthylène) (PET) comportant notamment un vernis anti-rayure du type polysiloxane, et d'épaisseur comprise entre 0,1 et 10 mm, de préférence d'au plus 7 mm.

4. Vitrage feuilleté (V) selon la revendication 3, **caractérisé en ce que** le verre minéral est recuit, trempé thermiquement ou renforcé chimiquement.

5. Vitrage feuilleté (V) selon l'une des revendications précédentes, **caractérisé en ce que** la couche adhésive intercalaire (2, 4, 6) est en polyvinylbutyral (PVB), polyuréthane (PU), éthylène - acétate de vinyle (EVA), d'épaisseur comprise entre 0,2 et 10 mm, notamment entre 0,38 et 4,56 mm.

6. Vitrage feuilleté (V) selon l'une des revendications précédentes, **caractérisé en ce que** toute feuille transparente rigide (3) sur les bords de laquelle des fils chauffants (10) sont repliés a des bords façonnés selon une forme arrondie de rayon de courbure au moins égal à 1, de préférence 2 et de manière particulièrement préférée 3 mm.

7. Vitrage feuilleté (V) selon l'une des revendications précédentes, **caractérisé en ce qu'**entre le chant ou la face principale extérieure (9) du vitrage feuilleté (V) destinée à être orientée, en position de montage, à l'opposé de l'atmosphère extérieure, d'une part, et des fils chauffants (10) d'autre part, est interposé un matériau opaque ou un matériau procurant de la souplesse (22).

8. Vitrage feuilleté (V) selon l'une des revendications précédentes, **caractérisé en ce que** des amenées (13, 14) sont disposées en périphérie de la face principale extérieure (9) du vitrage feuilleté (V) destinée à être orientée, en position de montage, à l'opposé de l'atmosphère extérieure, de manière à être totalement recouvertes, en position de montage, par un encadrement (30) sur lequel le vitrage feuilleté (V) est destiné à être fixé.

9. Vitrage feuilleté (V) selon l'une des revendications précédentes, **caractérisé en ce que** les amenées (11, 12) sont recouvertes par un matériau (20) notamment opaque, apte à en assurer la protection, la durabilité et l'isolation électrique.

10. Procédé de fabrication d'un vitrage feuilleté (V) selon l'une des revendications précédentes, **caractérisé en ce qu'**il comprend les opérations consistant à
- mettre en place un réseau de fils électroconducteurs chauffants (10) sur une couche adhésive intercalaire (2) ;
- dans une zone d'extrémités des fils chauffants (10), mettre en place au-dessus et en-dessous de ceux-ci (10) des amenées (11, 12, 13, 14),
- souder les fils chauffants (10) aux amenées (11, 12, 13, 14),
- mettre en place la couche adhésive intercalaire (2) entre les feuilles transparentes rigides (1, 3),
- le réseau de fils chauffants (10) et les amenées (11, 12 ; 13, 14) débordant des feuilles transparentes rigides (1, 3), rabattre ces parties en débordement des fils chauffants (10) et les amenées (11, 12 ; 13, 14) sur deux côtés opposés du chant du vitrage feuilleté (V) ou de sa face principale extérieure (9) destinée à être orientée, en position de montage, à l'opposé de l'atmosphère extérieure.

11. Application d'un vitrage feuilleté (V) selon l'une des revendications 1 à 9, comme vitrage à résistance balistique, pour un véhicule terrestre, aérien ou aquatique, ou pour le bâtiment.

## Patentansprüche

1. Verbundverglasung (V) mit einem Netz von Heizdrähten (10), umfassend mindestens zwei starre transparente Scheiben (1, 3, 5, 7), die jeweils paarweise durch eine Klebstoffzwischenschicht (2, 4, 6) miteinander verbunden sind, wobei mindestens ein Netz von Heizdrähten (10) auf einer Fläche, die nicht eine der beiden äußeren Hauptflächen (8, 9) der Verbundverglasung (V) bildet, von einer der mindestens zwei starren transparenten Scheiben (1, 3, 5, 7) angeordnet ist, wobei die Versorgung des Netzes von Heizdrähten (10) durch Kontakt mit mindestens zwei Sammelleitern (11, 12, 13, 14) erfolgt, die an eine elektrische Stromquelle angeschlossen sind, **dadurch gekennzeichnet, dass** die Sammelleiter (11, 12, 13, 14) an den Kanten der Verbundverglasung (V) und/oder an ihrer äußeren Hauptfläche (9) angeordnet sind, die in Montageposition gegenüber der äußeren Atmosphäre ausgerichtet sein soll.

2. Verbundverglasung (V) nach Anspruch 1, **dadurch gekennzeichnet, dass** ihre Dicke zwischen 15 und 100 mm beträgt.

3. Verbundverglasung (V) nach einem der Ansprüche 1 oder 2, **dadurch gekennzeichnet, dass** die mindestens zwei starren transparenten Scheiben (1, 3, 5, 7) aus Mineralglas wie Kalknatronglas, Aluminosilikatglas oder Borosilikatglas mit einer Dicke zwischen 0,5 und 20 mm bestehen, wobei die starre transparente Scheibe (7) die äußere Hauptfläche (9) der Verbundverglasung (V) bildet, die in Montageposition gegenüber der äußeren Atmosphäre ausgerichtet sein soll, wobei sie alternativ aus einem Polymermaterial wie Polycarbonat (PC) oder Poly(ethylenterephthalat) (PET) hergestellt sein kann, das insbesondere einen Antikratzlack vom Polysiloxantyp umfasst und eine Dicke zwischen 0,1 und 10 mm, vorzugsweise von nicht mehr als 7 mm, aufweist.

4. Verbundverglasung (V) nach Anspruch 3, **dadurch gekennzeichnet, dass** das Mineralglas geglüht, thermisch gehärtet oder chemisch verstärkt ist.

5. Verbundverglasung (V) nach einem der vorstehenden Ansprüche, **dadurch gekennzeichnet, dass** die Klebstoffzwischenschicht (2, 4, 6) aus Polyvinylbutyral (PVB), Polyurethan (PU), Ethylenvinylacetat (EVA) mit einer Dicke zwischen 0,2 und 10 mm, insbesondere zwischen 0,38 und 4,56 mm, besteht.

6. Verbundverglasung (V) nach einem der vorstehenden Ansprüche, **dadurch gekennzeichnet, dass** jede starre transparente Scheibe (3), an deren Kanten Heizdrähte (10) umgebogen sind, Kanten aufweist, die eine abgerundete Form mit einem Krümmungsradius von mindestens 1, vorzugsweise 2 und besonders bevorzugt 3 mm, haben.

7. Verbundverglasung (V) nach einem der vorstehenden Ansprüche, **dadurch gekennzeichnet, dass** zwischen der Kante oder der äußeren Hauptfläche (9) der Verbundverglasung (V), die in Montageposition gegenüber der äußeren Atmosphäre ausgerichtet sein soll, einerseits und den Heizdrähten (10) andererseits ein lichtundurchlässiges oder biegsames Material (22) zwischengeschaltet ist.

8. Verbundverglasung (V) nach einem der vorstehenden Ansprüche, **dadurch gekennzeichnet, dass** Sammelleiter (13, 14) am Umfang der äußeren Hauptfläche (9) der Verbundverglasung (V) angeordnet sind, die in Montageposition gegenüber der äußeren Atmosphäre ausgerichtet sein soll, so dass sie in Montageposition vollständig durch einen Rahmen (30) abgedeckt sind, an dem die Verbundverglasung (V) befestigt werden soll.

9. Verbundverglasung (V) nach einem der vorstehenden Ansprüche, **dadurch gekennzeichnet, dass** die Sammelleiter (11, 12) durch ein Material (20), insbesondere ein undurchsichtiges Material, abgedeckt sind, das geeignet ist, deren Schutz, Haltbarkeit und elektrische Isolierung zu gewährleisten.

10. Verfahren zur Herstellung einer Verbundverglasung (V) nach einem der vorstehenden Ansprüche, **dadurch gekennzeichnet, dass** es folgende Schritte umfasst:
- Anbringen eines Netzes von elektrisch leitfähigen Heizdrähten (10) auf einer Klebstoffzwischenschicht (2);
- in einem Bereich von Enden der Heizdrähte (10) Anbringen von Sammelleitern (11, 12, 13, 14) über und unter diesen (10),
- Verschweißen der Heizdrähte (10) mit den Sammelleitern (11, 12, 13, 14),
- Anbringen der Klebstoffzwischenschicht (2) zwischen den starren transparenten Scheiben (1, 3),
- wenn das Netz von Heizdrähten (10) und die Sammelleiter (11, 12; 13, 14) aus den starren transparenten Scheiben (1, 3) herausragen, Umbiegen dieser herausragenden Teile der Heizdrähte (10) und der Sammelleiter (11, 12; 13, 14) auf zwei gegenüberliegenden Seiten der Kante der Verbundverglasung (V) oder ihrer äußeren Hauptfläche (9), die in Montageposition gegenüber der äußeren Atmosphäre ausgerichtet sein soll.

11. Verwendung einer Verbundverglasung (V) nach einem der Ansprüche 1 bis 9 als ballistische Verglasung für ein Land-, Luft- oder Wasserfahrzeug oder für das Bauwesen.

## Claims

1. A laminated glazing (V) with a network of heating wires (10) comprising at least two rigid transparent sheets (1, 3, 5, 7) that are connected to one another pairwise by an intercalary adhesive layer (2, 4, 6), wherein at least one network of heating wires (10) is arranged on a face, not forming one of the two exterior main faces (8, 9) of the laminated glazing (V), of one of said at least two rigid transparent sheets (1, 3, 5, 7), the network of heating wires (10) being supplied with power by contact with at least two feeds (11, 12, 13, 14) that are connected to an electric current source, **characterized in that** the feeds (11, 12, 13, 14) are arranged on the edges of the laminated glazing (V) and/or on its exterior main face (9) that is intended to be oriented, in the mounting position, opposite the exterior atmosphere.

2. The laminated glazing (V) as claimed in claim 1, **characterized in that** it is between 15 and 100 mm in thickness.

3. The laminated glazing (V) as claimed in either of claims 1 and 2, **characterized in that** said at least two rigid transparent sheets (1, 3, 5, 7) are made of mineral glass such as soda-lime glass, aluminosilicate glass or borosilicate glass of between 0.5 and 20 mm in thickness, the rigid transparent sheet (7) forming the exterior main face (9) of the laminated glazing (V) that is intended to be oriented, in the mounting position, opposite the exterior atmosphere alternatively being able to be made of polymer material such as polycarbonate (PC) or poly(ethylene terephthalate) (PET) including in particular a polysiloxane anti-scratch coating, and being between 0.1 and 10 mm, preferably at most 7 mm, in thickness.

4. The laminated glazing (V) as claimed in claim 3, **characterized in that** the mineral glass is annealed, thermally tempered or chemically toughened.

5. The laminated glazing (V) as claimed in one of the preceding claims, **characterized in that** the intercalary adhesive layer (2, 4, 6) is made of polyvinyl butyral (PVB), polyurethane (PU) or ethylene-vinyl acetate (EVA) of between 0.2 and 10 mm, in particular between 0.38 and 4.56 mm, in thickness.

6. The laminated glazing (V) as claimed in one of the preceding claims, **characterized in that** any rigid transparent sheet (3) over the edges of which heating wires (10) are folded has edges that are shaped to be rounded with a radius of curvature that is at least equal to 1, preferably 2 and particularly preferably 3 mm.

7. The laminated glazing (V) as claimed in one of the preceding claims, **characterized in that**, between the edge or the exterior main face (9) of the laminated glazing (V) that is intended to be oriented, in the mounting position, opposite the exterior atmosphere on the one hand, and heating wires (10) on the other hand, an opaque material or a material providing flexibility (22) is interposed.

8. The laminated glazing (V) as claimed in one of the preceding claims, **characterized in that** feeds (13, 14) are arranged at the periphery of the exterior main face (9) of the laminated glazing (V) that is intended to be oriented, in the mounting position, opposite the exterior atmosphere so as to be entirely covered, in the mounting position, by a frame (30) to which the laminated glazing (V) is intended to be fixed.

9. The laminated glazing (V) as claimed in one of the preceding claims, **characterized in that** the feeds (11, 12) are covered by a material (20), which is in particular opaque, capable of providing them with protection, durability and electrical insulation.

10. A process for manufacturing a laminated glazing (V) as claimed in one of the preceding claims, **characterized in that** it comprises the operations consisting in:
- placing a network of electrically conductive heating wires (10) on an intercalary adhesive layer (2);
- in a zone at the ends of the heating wires (10), placing feeds (11, 12, 13, 14) on top of and under them (10);
- soldering the heating wires (10) to the feeds (11, 12, 13, 14);
- placing the intercalary adhesive layer (2) between the rigid transparent sheets (1, 3);
- the network of heating wires (10) and the feeds (11, 12; 13, 14) protruding from the rigid transparent sheets (1, 3); folding these protruding portions of the heating wires (10) and the feeds (11, 12; 13, 14) over two opposite sides of the edge of the laminated glazing (V) or of its exterior main face (9) that is intended to be oriented, in the mounting position, opposite the exterior atmosphere.

11. The application of a laminated glazing (V) as claimed in one of claims 1 to 9 as a ballistic glazing for a land, air or water vehicle, or for building.
